# EUROPEAN PATENT APPLICATION

(11) **EP 1 219 406 A2**
(43) Date of publication of application: **03.07.2002**
(21) Application number: 01130700.6
(22) Date of filing: 21.12.2001
(51) Int. Cl.: B29C 65/14, B29C 65/20

(54) **Welding of thermoplastic material**

(30) Priority: 27.12.2000 JP 2000396427
(71) Applicant: Sintokogio, Ltd., Nagoya-shi, Aichi-ken (JP)
(72) Inventor: Nishikawa, Kazuyuki, c/o Sintokogio, Ltd., Toyokawa-shi, Aichi-ken (JP); Makiguchi, Naoshi, c/o Sintokogio, Ltd., Toyokawa-shi, Aichi-ken (JP); Hosokawa, Mitsuo, c/o Sintokogio, Ltd., Toyokawa-shi, Aichi-ken (JP); Tsuiki, Hisamoto, c/o Sintokogio, Ltd., Toyokawa-shi, Aichi-ken (JP); Doi, Hideki, c/o Sintokogio, Ltd., Toyokawa-shi, Aichi-ken (JP)
(74) Representative: Behrens, Dieter, Dr.-Ing.

(57) **Abstract**

The method disclosed is for thermoplastic welding, by fusion bonding, an integral assembly of at least two composite thermoplastic parts (2, 4). One part (2) is integrally molded with a plurality of ribs (7) to be fused and bonded to their mates (8) of the counterpart (4). A heat generator assembly (3) applies heat energy to the ribs (7, 8) of the parts so as to heat and thus fuse them. Immediately after the application of the heat energy, pressure is applied to the heated parts (2, 4) to push them together. The heated ribs (7) of the part (2) are consequently aligned and bonding contacted with the heated ribs (8) of the counterpart (4). This application of pressure is maintained during a predetermined period to facilitate fusion bonding of the ribs (7,8). Finally, an integral assembly in which the part (2) is rigidly welded to the counterpart (4) via the ribs (7,8) is produced.

## Description

### Field of the Invention

The present invention relates to methods for welding thermoplastic materials, e.g., polystyrene, an ABS resin, a PMMA resin, a polypropylene resin, and equivalents. More particularly, the present invention relates to methods for welding, by fusion bonding, a plurality of thermoplastic parts to form an integral assembly, such as in the usage in the field of automotive equipment, e.g., a lamp, an intake manifold, a battery, etc.

### Description of the Prior Art

A thermoplastic welding is a process by which thermoplastic parts are fusion bonded to form an integral assembly. Prior to such a welding, each part is integrally molded of a thermoplastic molding material with faying zones to be fusion bonded to their mates of any counterpart. The faying zones are also made of a thermoplastic molding material. It is made of the same material as that of each part.

A conventional thermoplastic welding typically uses heat generators that are placed at or near the faying zones of the parts. The heat generators apply heat energy to the faying zones to raise the temperature thereof to the temperature at which the thermoplastic material thereof can be fused and melted. As a typical approach in the following step, the thermoplastic parts are then pressed together so that their heated faying zones are fusion bonded to their heated mates to form an integral assembly.

Unfortunately, the fusion-bonded faying zones of the integral assembly are often disconnected in whole or in part in an early stage of the estimated life span of the integral assembly as a product.

Thus, there is need in the developing art of the thermoplastic welding of parts for a method for reliably and rigidly fusion bonding two or more parts to form an integral assembly.

### Summary of the Invention

It is an object of the present invention to provide a method for reliably and rigidly welding, by fusion bonding, an integral assembly of a plurality of parts. The plurality of parts includes at least two parts, that is, a first part and a second part. As used herein and in the appended claims, the term "part" refers to a composite thermoplastic part to be fusion bonded to its at least one counterpart as a composite thermoplastic part to form an integral assembly. Each part is integrally molded with faying zones to be fused and bonded to their mates of at least one counterpart. The term "faying zones" includes at least one continuous zone, as well as discontinuous zones, to be fusion bonded to their mates. Each faying zone may also be made of a thermoplastic material that may be the same as, or differ from, that of the corresponding part.

In one aspect of the present invention, the steps to accomplish the above welding are as follows:
Step a: Placing a heating source having a plurality of surfaces that are preheated close to the faying zones of the parts. As used herein and in the appended claims, each surface of the heat source may, but it is not so limited, form an elongated strip form being, e.g., 1 mm wide.
Step b: Applying heat energy to the faying zones of the parts so as to heat them to an appropriate temperature such that each faying zone is in a predetermined heated and fused condition. The heat energy application to the faying zones may be carried out through contact with the corresponding heating generators or by non-contact heat exchanges between them and the corresponding heating generators.
Step c: Removing the heating source from the heated faying zones.
Step d: Immediately bringing the heated faying zones of the first part into bonding contact with their heated mates of the secondpart and pushing the parts together to facilitate fusion bonding between the parts via their heated faying zones; and
Step e: Maintaining the state by which the parts are to be pushed together in the step d) during a predetermined period that suffices to cause the heated faying zones thereof to be rigidly welded to their mates of at least one counterpart by the fusion bonding.

The method may further include the step of determining and setting the distance for a gap between the first heat generator assembly and the corresponding faying zones of the first part, the distance for a gap between the second heat generator assembly and the corresponding faying zones, the first period and the first temperature of the first heat generator assembly, and the second period and the second temperature of the second heat generator assembly, based on the types or heat capacities of thermoplastic materials of the faying zones of the first and second parts.

The heating source may include a first heat generator assembly for applying the heat energy to the faying zones of the first part, and a second, independently operable, heat generator assembly for applying the heat energy to the faying zones of the second part. In turn, each heat generator assembly may include a plurality of electrical heat generators. Each heat generator assembly can control the temperature of the heat energy thereof and the period that it is to be activated.

It is another object of the present invention to provide a method for checking the heated and fused condition of each faying zone of the parts immediately after the heat energy application of the above step b) occurs. The method comprises the steps of applying a predetermined pressure to the heated faying zone to be inspected; and determining whether the pressed faying zone is depressed to a predetermined depth. If it is, it is determined that the heated and fused conditions of the faying zone to be inspected are acceptable.

Other objects, features, and advantages of this invention will be dear from the following detailed description of the preferred embodiment thereof.

### Brief Description of the Drawing

The accompanying drawing, which is incorporated in and constitutes a part of the specification, schematically illustrates a preferred embodiment of the present invention, and together with the general description given above and the detailed description of the preferred embodiment given below serve to explain the principles of the invention.

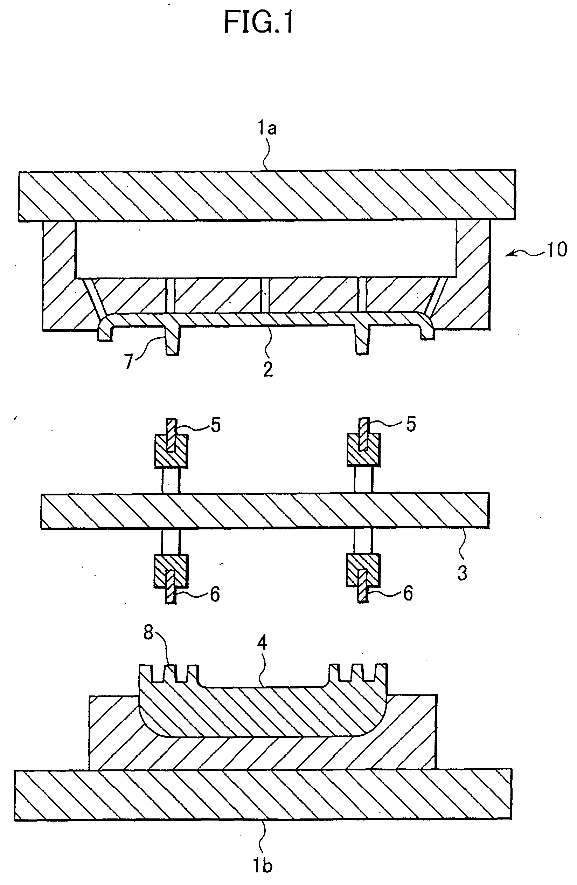

Fig. 1 shows a schematic front view of the apparatus for embodying the methods of the present invention.

### Description of the Preferred Embodiments

Fig. 1 shows an apparatus, generally denoted by the number 10, for welding by fusion bonding two or more thermoplastic parts into an integral assembly, such as a lamp, an intake manifold, a battery, and other automobile equipment.

The preferred embodiment of the apparatus 10 and the process of fusion bonding the thermoplastic parts will now be described for manufacturing an integral assembly. The apparatus 10 includes an upper supporting plate 1a to support an upper part 2, which is made of composite thermoplastic material such as an acrylic resin, and a lower supporting plate 1b to support a lower part 4, which is made of composite thermoplastic material such as an ABS resin. The upper and lower supporting plates 1a and 1b can be moved vertically by any elevation mechanism (not shown) that is well known in the art.

The upper part 2 is formed with a plurality of elongated ribs 7 extending the length of the lower surface of the part 2 with a space between each one. The dimensions of each rib 7 are 2.2 mm in width and 3.0 mm in height. Similarly, the lower part 4 is formed with a plurality of elongated ribs 8 extending the length of the upper surface of the part 4 with a space between each one. The dimensions of each rib 8 of the lower part 4 are 1.5 mm in width and 5.0 mm in height.

The top surface of each rib of each part acts as a faying zone to be welded to its mate of the counterparts. Each rib or faying zone can be formed as a continuous or discontinuous zone.

The upper and lower supporting plates 1a and 1b are initially positioned so that the lower surface of the upper part 2 is initially opposed to the upper surface of the lower part 4 with a predetermined gap between the ribs 7 of the upper part 2 and the ribs 8 of the lower part 4.

The apparatus 10 also includes a slidable plate 3, whose upper face supports a pair of upper electrical heaters 5 and whose lower face supports a pair of lower electrical heaters 6. Each electrical heater is made of a nickel-chrome or iron-chrome alloy. Upon the current being supplied to the heaters 5 and 6 from a current source (not shown), they apply heat energy to the ribs 7 and 8 of the parts 2 and 4 so as to heat and thus melt them.

The slidable plate 3 can be horizontally moved into the space between the upper and lower supporting plates 1a and 1b along the widths of them by any appropriate means (not shown) that is known in the art.

When the upper part 2 and the lower part 4 are initially positioned as described above, the slidable plate 3 is inserted into the predetermined gap between the ribs 7 and the ribs 8. At this time, the upper heaters 5 are preheated to 450 C°, the lower heaters 6 are preheated to 350 C°, and thus their top surfaces become heated. Each top surface of the heaters 5 and 6 may form an elongated strip form. One example of such an elongated surface is 1 mm wide.

Then the upper supporting plate 1a descends and the lower supporting plate 1b rises such that each gap between the distal ends of the ribs 7 of the upper part 2 and the top surfaces of the upper heaters 5, and between the distal ends of the ribs 8 of the lower part 4 and the top surfaces of the lower heaters 6, is 1 mm. This state is maintained during a predetermined period, while the temperatures of the upper and lower heaters 5 and 6 are maintained so as to heat and melt the ribs 7 and 8 by the heat of the corresponding heaters 5 and 6.

After the predetermined period for heating the ribs 7 and 8, the upper supporting plate 1a rises and the lower supporting plate 1b descends, to extract the slidable plate 3 from the gap between the upper part 2 and the lower part 4. Immediately after this state, the upper supporting plate 1a again descends and the lower supporting plate 1b again rises such that pressure is applied to the upper and lower parts 2 and 4 to be welded, with the upper ribs 7 and the corresponding lower ribs 8 being attached at their distal ends. The pressure is applied to the upper and lower parts 2 and 4 until the ribs 7 and 8 are cooled, to ensure rigid welding between them. Thus, the upper part 2 and the lower part 4 form an integral assembly that is well welded.

For checking any of the heated ribs 7 and 8 immediately after the heat energy application and before fusion bonding to the mate of the counterpart, a sampling inspection may be used to inspect to determine whether the heated and fused condition of the heated rib that is selected to be inspected is acceptable. To make such an inspection, a predetermined pressure is applied to the selected rib to determine whether it is depressed to a predetermined depth. More particularly, a heat-resistant pushing plate (not shown), which is preheated to the temperature of the selected rib, pushes the selected rib from the opposite side thereof at 0.1 kg/cm². Under this state, it must be checked to see if the selected rib is depressed by 0.1 mm or more. If it is, it is determined that the heated and fused condition of the inspected rib is acceptable.

Even if the above acceptable condition is achieved, if the heated ribs tend to encounter a thermal decomposition due to an immediate heating, no acceptable condition is actually achieved. To deal with this problem, the temperature of the corresponding heaters may be lowered, or the gap between the ribs and the corresponding heaters may be increased, to avoid the immediate heating that otherwise may occur.

In the first embodiment of the present invention, as noted above, the temperature of 350 C° of the lower heaters 6 for heating the ribs 8 of the lower part (the ABS resin) 4 is lower than that of the temperature of 450 C° of the upper heaters 5 for heating the ribs 7 of the upper part (the acryl resin) 2. This temperature difference is considered along with the difference between the materials of the upper and lower parts 2 and 4 to ensure the reliable welding between them.

In contrast, when the temperature of the lower heaters 6 for heating the lower ABS resin ribs 8 is also 450 C°, which is the same temperature as that of the upper heaters 5 for heating the upper acryl resin ribs 7, the lower ribs 8 are overheated and deformed by their weight, since they are 3 mm in height and made of the thin ABS resin. Finally, the lower ribs 8 may be unreliably welded to the upper ribs 7 in whole or in part. Thus, the temperature difference between the upper and lower heaters 6 and 7 that is based on the difference between the materials of the upper and lower parts 2 and 4 should be considered. One of ordinary skill in the art can readily conceive the appropriate temperature to be applied to the material of each part from his or her knowledge of and experience with thermoplastics.

Still referring to Fig. 1, the second embodiment will be described. In this embodiment, the upper part 2 and the lower part 4 are made of a polypropylene resin. In contrast to the first embodiment, the dimensions of each rib 7 of the upper part 2 are 3.0 mm wide and 5.0 mm high. The dimensions of each rib 8 of the lower part 4 are 2.0 mm wide and 150.0 mm high.

In this embodiment, while heating the ribs 7 and 8, each gap between the distal ends of the ribs 7 of the upper part 2 and the distal ends of the upper heaters 5, and between the distal ends of the ribs 8 of the lower part 4 and the distal ends of the lower heaters 6, is 1.5 mm. In this state, the upper heaters 5 heat the upper ribs 7 for 30 seconds at a temperature of 450 C°, while the lower heaters 6 heat the lower ribs 8 for 20 seconds at a temperature of 450 C°. These periods for heating the upper ribs 7 and the lower ribs 8 are set in such a manner that the starting times of the periods for heating the upper ribs 7 and the lower ribs 8 differ, while the ending times of the periods are the same. Finally, the upper part 2 and the lower part 4 are rigidly welded at their ribs 7 and 8 to form an integral assembly.

It should be understood that the embodiments herein and the drawing are intended to just recite descriptions of examples of the present invention, rather than intended to limit them. For example, besides two parts 2 and 4 in the embodiments, three or more parts may be used as the counterparts to be welded to each other and thus assembled as an integral assembly.

One of ordinary skill in the art may select the shapes, dimensions, and numbers of the ribs based on the designs of the parts and their types or properties, especially heat capacities, of thermoplastic materials.

If necessary, the faying zones may be made of a thermoplastic material that differs from that of the corresponding part. For example, each faying zone may have a surface layer that contains an additional thermoplastic resin.

In the embodiments, a heat exchange between each heater and the corresponding faying zone of the parts 2 and 4 is carried out by a non-contact heat exchange between them, since a gap exists between them. Alternatively, each faying zone may be heated through contacting the corresponding heater without a gap between them.

The above described and other numerous modifications and variations can be made by one skilled in the art without departing from the sprit and the scope of the invention, as set forth in the appended claims.

## Claims

1. A method for welding, by fusion bonding, an integral assembly of a plurality of parts, wherein the plurality of parts includes at least a first part and a second part, each part being integrally molded of a thermoplastic material with faying zones that are made of a thermoplastic material to be fused and bonded to their mates of the counterpart, the method comprising the steps of:
a) placing a heating source having a plurality of surfaces that are preheated close to the faying zones of the parts;
b) applying heat energy to the faying zones of the parts so as to heat them to an appropriate temperature through contact with the corresponding heated surfaces of the heating source or by non-contact heat exchanges between them and the corresponding heated surfaces such that each faying zone is in a predetermined heated and fused condition;
c) removing the heating source from the heated faying zones;
d) immediately bringing the heated faying zones of the first part into bonding contact with their heated mates of the second part and pushing the parts together to facilitate fusion bonding between the parts via their heated faying zones; and
e) maintaining the state by which the parts are to be pushed together in the step d) during a predetermined period that suffices to cause the heated faying zones thereof to be rigidly welded to their mates of at least one counterpart by the fusion bonding.

2. The method as recited in claim 1, wherein the heating source includes a first heat generator assembly for applying the heat energy to the faying zones of the first part, and a second, independently operable, heat generator assembly for applying the heat energy to the faying zones of the second part, wherein each heat generator assembly is capable of controlling the temperature of the heat energy thereof and the period that is it to be activated.

3. The method as recited in claim 2, wherein each heat generator assembly includes a plurality of electric heat generators, each of which has one of the surfaces to be preheated prior to the heat energy application.

4. The method as recited in claim 3, wherein upon applying the heat energy to the faying zones of the parts, the faying zones of the first part are placed to oppose their mates of the second part via the heat generator assemblies therebetween.

5. The method as recited in claim 3, wherein upon applying the heat energy to the faying zones of the parts, each electrical heat generator of the heat generator assemblies is opposite the corresponding faying zone to be heated.

6. The method as recited in claim 5, wherein upon applying the heat energy to the faying zones of the parts, the faying zones of the first part are heated by the first heat generator assembly at a first temperature during a first period, while the faying zones of the second part are heated by the second heat generator assembly at a second temperature during a second period.

7. The method as recited in claim 6 wherein at least the faying zones of the first part are made of a thermoplastic material that is the same as that of the faying zones of the second part.

8. The method as recited in claim 7 wherein the first period and the first temperature are the same as the second period and the second temperature, respectively.

9. The method as recited in claim 6, wherein at least the faying zones of the first part are made of a thermoplastic material that differs from that of the faying zones of the second part.

10. The method as recited in claim 6, wherein the first period differs from that of the second period.

11. The method as recited in claim 10, wherein the first period and the second period are terminated at substantially the same time.

12. The method as recited in claim 9, wherein the first temperature differs from the second temperature.

13. The method as recited in claim 6, further comprising the step of determining and setting the distance for a gap between the first heat generator assembly and the corresponding faying zones of the first part, the distance for a gap between the second heat generator assembly and the corresponding faying zones, the first period and the first temperature of the first heat generator assembly, and the second period and the second temperature of the second heat generator assembly, based on the types or heat capacities of thermoplastic materials of the faying zones of the first and second parts.

14. The method as recited in claim 1, wherein the integral assembly is made of three or more parts that include said first part, said second part, and the other remaining part or parts, each remaining part is integrally molded of a thermoplastic material with faying zones that are made of a thermoplastic material, to be fused and bonded to their mates of at least one counterpart in the same manner of those of said first and second parts.

15. A method for checking the heated and fused conditions of each faying zone of the parts immediately after the heat energy application of the step b) of claim 1, the method comprising the steps of:
a) applying a predetermined pressure on the heated faying zone to be inspected; and
b) determining whether the pressed faying zone is depressed to a predetermined depth, and if it is, it is determined that the heated and fused condition of the faying zone to be inspected are acceptable.

16. A method for welding together, by fusion bonding, an integral assembly of a plurality of parts, wherein each part is integrally molded of a thermoplastic material with faying zones are made of a thermoplastic material, each of which is to be fused and bonded to its mate of the counterpart, the method comprising the steps of:
a) placing the parts in such a manner that each faying zone of each part is opposed to its mate of the counterpart with a predetermined gap therebetween;
b) inserting a plurality of heat generators, each of which has a surface to be preheated into the gap between the parts in such a manner that each surface thereof is positioned close to the corresponding faying zone of the parts;
c) applying heat energy to the faying zones of the parts so as to heat them to an appropriate temperature through contact with the corresponding heated surfaces of the heat generators or by non-contact heat exchanges between them and the corresponding heated surfaces such that each faying zone is in a predetermined heated and fused condition;
d) removing the heat generators from the gap between the parts;
e) immediately bringing the heated faying zones of the parts into bonding contact with their heated mates of at least one counterpart and pushing the parts together to facilitate fusion bonding between the parts via their heated faying zones; and
f) keeping the parts pushed together until the faying zones of the parts are rigidly welded to their mates of at least one counterpart by the fusion bonding.

17. A method for welding, by fusion bonding, an integral assembly of a first part and a second part, wherein the first part is molded of a first thermoplastic material, while the second part is molded of a second thermoplastic material that differs from the first thermoplastic material, and wherein each part is integrally molded with faying zones to be fused and bonded to their mates of the counterpart, the method comprising the steps of:
a) placing the parts in such a manner that each faying zone of the first part is opposed to its mate of the second part with a predetermined gap therebetween;
b) inserting a plurality of heat generators into the gap between the parts in such a manner that each heat generator is positioned close to the corresponding faying zone of the parts;
c) applying heat energy to each faying zone of the first part by the corresponding heat generator at a first temperature during a first period so as to heat and thus fuse it, applying heat energy to each faying zone of the second part by the corresponding heat generator at a second temperature during a second period so as to heat and thus fuse it, and terminating the first period and the second period at substantially the same time;
d) removing the heat generators from the gap between the parts;
e) immediately bringing the heated faying zones of the parts into bonding contact with their mates of the counterpart and pushing the parts together to facilitate fusion bonding between the parts via their heated faying zones;
f) keeping the parts pushed together until the faying zones of each part are rigidly welded to their mates of the counterpart by the fusion bonding.

18. The method as recited in claim 17, wherein the first period differs from the second period.

19. The method as recited in claim 17, wherein the first temperature differs from the second temperature.

20. The method as recited in claim 17, wherein the heat energy applied to each faying zone is carried out through contact with the corresponding heat generator or by a non-contact heat exchange between it and the corresponding heat generator.
